# EUROPEAN PATENT SPECIFICATION

(11) **EP 2 715 734 B1**
(45) Date of publication and mention of the grant of the patent: **08.03.2017**
(21) Application number: 12793418.0
(22) Date of filing: 04.06.2012
(51) Int. Cl.: G21C 15/243, G21C 15/18, G21C 19/07

(54) **PASSIVE DECAY HEAT REMOVAL AND RELATED METHODS**
PASSIVE NACHZERFALLSWÄRMEABFUHR UND ZUGEHÖRIGE VERFAHREN
ÉVACUATION DE CHALEUR À DÉCROISSANCE PASSIVE ET PROCÉDÉS CORRESPONDANTS

(30) Priority: 03.06.2011 US 201161457791 P
(43) Date of publication of application: 09.04.2014
(73) Proprietor: Filippone, Claudio, College Park, MD 20740-2142 (US)
(72) Inventor: Filippone, Claudio, College Park, MD 20740-2142 (US)
(74) Representative: Barbaro, Gaetano
(86) International application number: PCT/US2012/040752
(87) International publication number: WO 2012/167256

(56) References cited:
- EP-A1- 0 704 860
- KR-A- 20080 004 714
- US-A- 4 643 871
- US-A- 4 643 871
- US-A- 4 753 771
- US-A- 5 006 303
- US-A- 5 006 303
- US-A1- 2002 154 725
- US-A1- 2005 074 083

## Description

### DESCRIPTION OF THE INVENTION

This application claims the benefit of priority of U.S. Provisional Application No. 61/457,791, filed June 3, 2011.

### FIELD OF THE INVENTION

Various embodiments of the present disclosure generally relate to passive cooling systems and related methods. More specifically, particular embodiments of the present disclosure relate to decay heat removal systems and methods for use in, for example, a nuclear reactor.

### DESCRIPTION OF RELATED ART

Nuclear reactors typically rely on active mechanisms for removing decay heat generated from nuclear spent fuel. Decay heat is an unavoidable byproduct of nuclear fission energy, which amounts to approximately 6.5% of the nominal core power at the time of shut-down. Although decay heat is reduced to approximately 0.2% after about a week following a shutdown, decay heat continues to be released from nuclear spent fuel and may pose a significant risk if a proper and continuous cooling mechanism is not provided during shutdown and/or storage in spent or storage fuel pools.

In general, a spent fuel pool is a reinforced concrete structure lined with steel plates and filled with water. A spent fuel is primarily designed to store spent nuclear fuel while providing continuous cooling to the fuel to ensure that the temperature of the fuel does not increase beyond safety margins. For example, spent nuclear fuel can be positioned at the bottom of the pool, where a large volume of water in the pool is actively circulated through one or more heat exchangers. These heat exchangers operate through activation of one or more electric pumps and thermally communicate with a so-called Ultimate Heat Sink (UHS), normally represented by a large body of water (e.g., river, lake, artificial pond, ocean, etc.).

The United States Nuclear Regulatory Commission (NRC) requires all nuclear power plants operating in the United States to maintain emergency systems that can remove thermal energy from vital plant systems in the event of a design-basis, worst-case accident. The emergency systems must operate independently of any external source of electricity for an extended period of time and include emergency generators to provide emergency onsite electric power. The emergency systems also include containment structures and suppression pools capable of receiving and suppressing the thermal energy that could be released from the reactor core and spent fuel pool by transferring this thermal energy to an UHS.

Therefore, each nuclear power plant must have an UHS capable of removing thermal heat necessary to mitigate a worst case accident. During the Fukushima Daiichi 2011 accident, however, the UHS of the plant became inaccessible due to seismic- and flooding-induced failure of emergency equipments, which were designed to provide onsite electricity for actively enabling coolant circulation via electric pumps between the heat-generating plant components and the UHS. This failure of emergency equipments prevented adequate thermal exchange between plant equipments and the UHS.

Further, if the structure of an UHS becomes damaged, for example, due to earthquake or flooding, restoring access to or providing a secondary source of electric power alone may not be sufficient to adequately cool the plant equipments. Ensuring that nuclear reactor cooling equipment remains functioning and adequately exchanging thermal energy with an UHS during an accident is a key to the safety of plant personnel and the general public.

### SUMMARY

Accordingly, there is a need for developing an independent passive cooling system and related methods that may not require electricity to operate and can be non-invasively retrofitted with an existing nuclear power plant to ensure decay heat removal under an accident condition.

Therefore, various exemplary embodiments of the present disclosure provide systems and methods for removing decay heat from spent fuel pools and/or from the fuel contained in the reactor core for an extended period of time, via passive natural convective heat transfer mechanisms whose cooling performance is independent of electric energy availability and does not rely on the plant ultimate heat sink.

To attain the advantages and in accordance with the purpose of the invention, as embodied and broadly described herein, one exemplary aspect of the present disclosure provides a passive cooling system. The system includes a first buoyant heat exchanger in thermal communication with a first fluid, a second heat exchanger in thermal communication with a second fluid, and a hydraulic circuit connecting between the first buoyant heat exchanger and the second heat exchanger. The second heat exchanger is positioned at a higher elevation than the first heat exchanger, such that a working fluid inside the hydraulic circuit flows between the first and second heat exchangers via natural circulation.

According to another exemplary aspect, a heat exchanger may include a main body defining an inlet, an outlet, and a flow passageway connecting between the inlet and outlet, and a pair of buoyant tanks each fixed to each opposing side of the main body for providing buoyant force when the main body is submerged into fluid. In an exemplary embodiment, each of the buoyant tanks may comprise a substantially conical shape.

In some exemplary aspects, a decay heat removal system for use in a nuclear reactor includes a first buoyant heat exchanger in thermal communication with a first fluid inside the nuclear reactor, a second heat exchanger in thermal communication with a heat sink located outside a reactor containment, and a hydraulic circuit connecting between the first heat exchanger and the second heat exchanger. The second heat exchanger is positioned at a higher elevation than the first heat exchanger, such that a working fluid inside the hydraulic circuit may flow between the first and second heat exchangers via natural circulation.

Accordingly to another exemplary aspect, a method of removing decay heat from a nuclear reactor is provided. The method includes transferring decay heat from a spent fuel to a first fluid, transferring heat from the first fluid to a second fluid via a first buoyant heat exchanger, allowing the second fluid in the first heat exchanger to flow to a second heat exchanger, and transferring heat from the second fluid to a heat sink located outside a reactor containment via the second heat exchanger. The flow of the second fluid between the first heat exchanger and the second heat exchanger occurs via natural circulation.

Additional objects and advantages of the invention will be set forth in part in the description which follows, and in part will be obvious from the description, or may be learned by practicing the invention. The objects and advantages of the invention will be realized and attained by means of the elements and combinations particularly pointed out in the appended claims.

It is to be understood that both the foregoing general description and the following detailed description are exemplary and exemplary only and are not restrictive of the invention, as claimed.

### BRIEF DESCRIPTION OF THE DRAWINGS

The accompanying drawings, which are incorporated in and constitute a part of this specification, illustrate several embodiments of the invention and together with the description, serve to explain the principles of the invention.
Fig. 1 is a schematic illustration of a passive decay heat removal system according to one exemplary embodiment of the present disclosure.
Fig. 2 is a schematic, perspective view of a first heat exchanger, according to one exemplary embodiment.
Fig. 3 is a front perspective view of the first heat exchanger shown in Fig. 2.
Fig. 4 is a rear perspective view of the first heat exchanger shown in Fig. 2.
Fig. 5 is a perspective view of the first heat exchanger shown in Fig. 1, which comprises a plurality of heat exchangers interconnected together.
Fig. 6 is a perspective view of a support structure used to fix the first heat exchanger to a liner of a spent fuel pool.
Fig. 7 is a schematic illustration of a passive decay heat removal system according to another exemplary embodiment of the present disclosure.
Fig. 8 is a schematic diagram illustrating an exemplary application of the passive decay heat removal system of Fig. 1 in a boiling water reactor.
Fig. 9 is a partial exploded view of Fig. 8, illustrating an application of the passive decay heat removal system of Fig. 1 in a spent fuel pool of the boiling water reactor.
Fig. 10 is a schematic diagram illustrating another exemplary application of the passive decay heat removal system of Fig. 1 in a boiling water reactor.
Fig. 11 is a partial exploded view of Fig. 10, illustrating an application of the passive decay heat removal system of Fig. 1 in a reactor vessel.

### DESCRIPTION OF THE EXEMPLARY EMBODYMENTS

Reference will now be made in detail to the exemplary embodiments of the invention, examples of which are illustrated in the accompanying drawings. Wherever possible, the same reference numbers or letters will be used throughout the drawings to refer to the same or like parts.

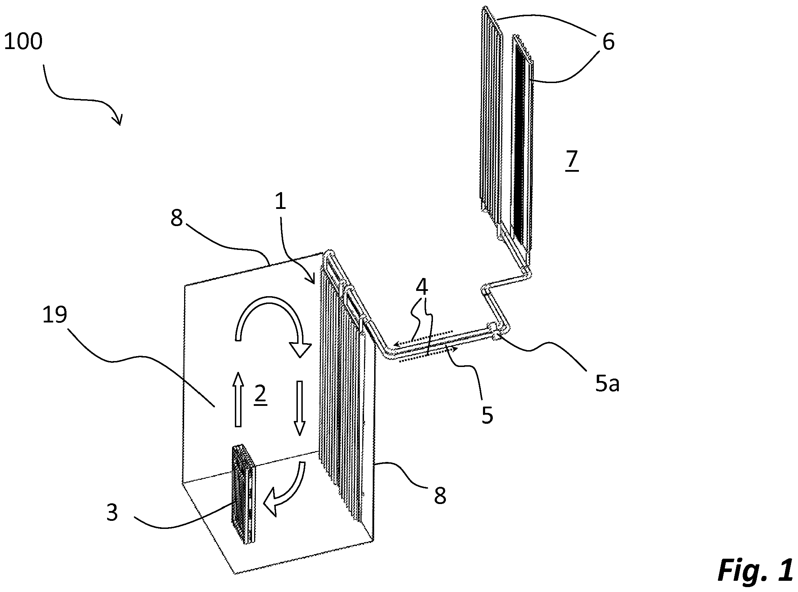

Fig. 1 illustrates a passive decay heat removal system 100 according to one exemplary embodiment of the present disclosure. System 100 may include a first buoyant heat exchanger 1 submerged in a spent fuel pool 19, a second heat exchanger 6 placed in thermal communication with an ultimate heat sink or a sustainable source of cooling reservoir, and an hydraulic circuit 5 connecting between first heat exchanger 1 and second heat exchanger 6 and forming a closed-loop flow channel therebetween.

In this exemplary configuration, second heat exchanger 6 is positioned at a higher elevation than first heat exchanger 1 and the surface of spent fuel pool 19 to favor passive natural convection flow and recirculation. The specific component layout and piping for hydraulically connecting second heat exchanger 6 may depend on the design of a nuclear power plant to which system 100 is to be installed.

First heat exchanger 1 may be one or more modular radiators that can be non-invasively installed in spent fuel pool 19. First heat exchanger 1 may be submerged under water 2 (or any other fluid) of spent fuel pool 19 to transfer decay heat generated from spent nuclear fuel stored in spent fuel pool 19 to second heat exchanger 6.

For example, spent nuclear fuel may be stored on a rack 3 placed at the bottom of spent fuel pool 19 and is cooled by the water 2 of spent fuel pool 19. The decay heat transferred to the water 2 of spent fuel pool 19 may then be transferred to a working fluid of first heat exchanger 1 circulating inside the closed-loop flow channel. As will be described in more detail herein, the working fluid inside the closed-loop flow channel may circulate passively without requiring any external power source. Further, the working fluid does not mix with the water of spent fuel pool 19.

The working fluid, carrying the heat transferred from the water of spent fuel pool 19 via first heat exchanger 1, may travel through hydraulic circuit 5 to second heat exchanger 6 to exchange heat with cooling fluid 7 surrounding second heat exchanger 6. Hydraulic circuit 5 may be designed to withstand certain accident conditions typically considered in design-basis and severe accidents, such as, for example, seismic activities and/or explosions. The cooling fluid 7 may be any fluid of an independent UHS of the power plant, such as, for example, environmental air or water depending on site-specific and nuclear power plant-specific characteristics.

The working fluid may be any suitable fluid with thermal-physical properties that are compatible with high thermal energy transport. The working fluid may be selected so as to allow compatible mixing with the water 2 of spent fuel pool 19 (e.g., deionized purified water) in case hydraulic circuit 5 or first heat exchanger 1 is breached and the working fluid is drained into spent fuel pool 19.

First heat exchanger 1 and second heat exchanger 6 may be shaped to maximize heat transfer from water 2 of spent fuel pool 19 and to cooling fluid 7, respectively, without impairing normal power plant operations.

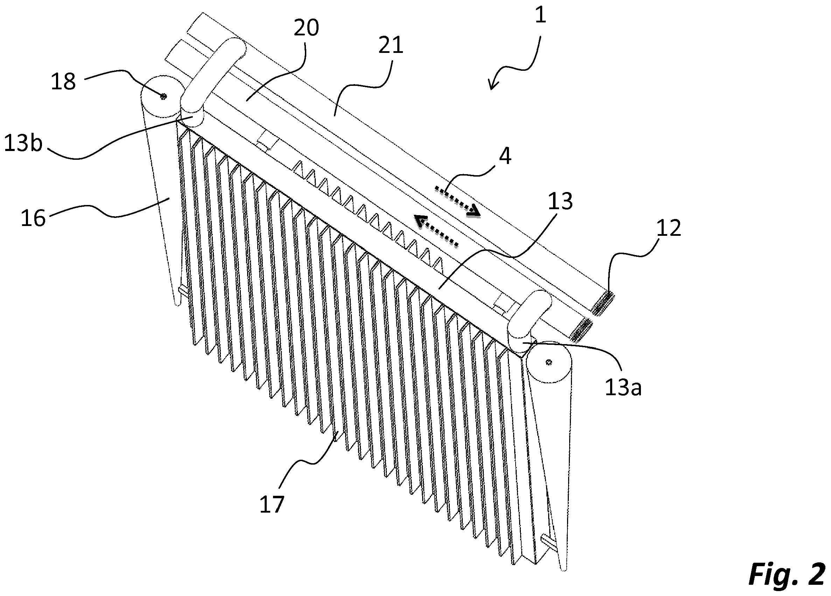

Fig. 2 is a schematic, perspective view of first heat exchanger 1, according to one exemplary embodiment. First heat exchanger 1 includes a main body 13 and may include a plurality of fins 17 extending from main body 13. The main body 13 defines an internal flow channel through which the working fluid may pass to transfer heat from spent fuel pool 19. The plurality of fins 17 may enhance the heat transfer by increasing the heat transfer surface area.

Hydraulic circuit 5 may comprise a pair of cold and hot legs 20, 21, and the inlet 13a and outlet 13b of the main body 13 may be connected to cold leg 20 and hot leg 21, respectively, of hydraulic circuit 5. Referring to Fig. 1, when the working fluid inside main body 13 heats up as a result of heat exchange with high-temperature water 2 of spent fuel pool 19, the heated working fluid rises up and exits through outlet 13b and into hot leg 21 of hydraulic circuit 5. The heated working fluid travels through second heat exchanger 6 and is cooled down by cooling fluid 7. As the working fluid cools down in second heat exchanger 6, the cooled working fluid returns to cold leg 20, enters inlet 13a, and sinks to the bottom of first heat exchanger 1. The fluid flow, shown with arrows 4, between first heat exchanger 1 and second heat exchanger 6 is driven by natural circulation, providing a free convective heat transfer mechanism.

First heat exchanger 1 may also include one or more buoyant tanks 16 structurally connected to main body 13. Buoyant tank 16 enables first heat exchanger 1 to float at a predetermined depth. With a variation in its size and shape, the depth at which first heat exchanger 1 may be positioned can be controlled. Buoyant tank 16 may also be shaped in a way to ensure upright positioning when submerged in spent fuel pool 19. By way of example only, buoyant tank 16 may form a conical or frusto-conical shape, as best shown in Fig. 2. Buoyant tank 16 may be hollow or contain buoyant material.

In addition to function as a buoyant device, buoyant tank 16 may serve as a storage tank for storing fluid used in inhibiting hydrogen explosion, such as, for example, inert gas. Buoyant tank 16 may be configured to release inhibiting gas when a predetermined triggering event occurs. A triggering event may be the temperature of spent fuel pool 19 exceeding a predetermined threshold temperature, e.g., boiling temperature, which may indicate formation of hydrogen gas via zircalloy oxidation with high temperature steam under an accident scenario.

As shown in Fig. 1, first heat exchanger 1 may be fully submerged in water 2 of spent fuel pool 10, and the transfer of decay heat from spent fuel in rack 3 may occur through convective heat transfer with fins 17 of first heat exchanger 1 as water 2 passively circulates in a loop within spent fuel pool 19 as shown in the figure. The working fluid inside first heat exchanger 1 circulates passively by free convection mechanisms, where hot fluid tends to move upward due to density gradient and volume changes. As hot fluid moves against gravity colder fluid replaces the volume of the fluid being displaced, therefore creating a passive convective heat transferring mechanism.

As briefly mentioned above and will be described in more detail later, first heat exchanger 1 may comprise one or more modular radiators or heat exchangers interconnected together. For example, first heat exchanger 1 shown in Fig. 1 may include two modular radiators. To interconnect two or more heat exchangers 1, hydraulic circuit 5 may be provided with one or more connectors 12 in each of cold and hot legs 20 and 21. Connectors 12 may be sufficiently flexible to withstand predetermined degree of seismic activities and explosions.

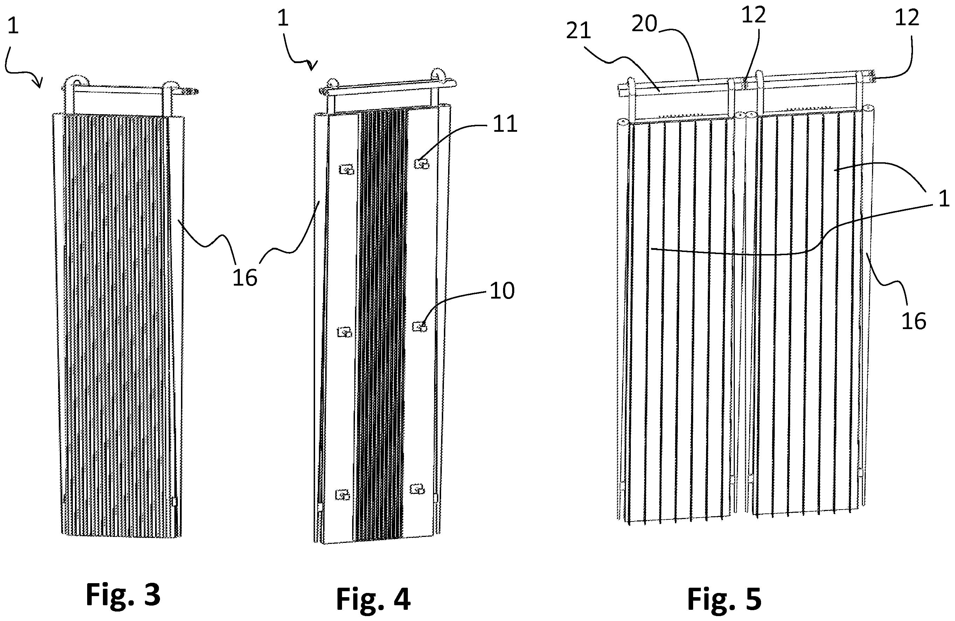

Figs. 3 and 4 show front and rear view of first heat exchanger 1. The axial length of first heat exchanger 1 may be adjusted depending on the depth of spent fuel pool 19. In an exemplary embodiment, first heat exchanger 1 extends from the bottom to the top surface of spent fuel pool 19. First heat exchanger 1 may include a plurality of magnetic flanges 11 configured to engage a liner 8 of spent fuel pool 19. First heat exchanger 1 may also include a seismic damper 10 in each of magnetic flange 11. Fig. 5 illustrates two heat exchangers 1 aligned and coupled to one another through connectors 12.

Once first heat exchanger 1 is assembled, it may be lowered into spent fuel pool 19 by a crane. Buoyant tank 16 may provide sufficiency buoyancy so as to reduce or eliminate strain on magnetic flanges 11.

Second heat exchanger 6 may be substantially identical to first heat exchanger 1. For example, second heat exchanger 6 may include one or more modular radiators to transfer heat between the working fluid and cooling fluid 7. If cooling fluid 7 is not liquid (e.g., second heat exchanger 6 is not submerged into liquid), second heat exchanger 6 may not include buoyant tank 16.

The total number of first and second heat exchangers 1 and 6 may depend on plant-specific decay heat removal requirements and/or whether the retrofitted UHS 7 relies on environmental air or a body of water (e.g., artificial ponds, lakes, or oceans).

First heat exchanger 1 and second heat exchanger 6 may be made of a suitable lightweight material with high thermal conductivity and sufficient strength to sustain modest internal pressures inside hydraulic circuit 5. Examples of such a material may include, but not limited to, aluminum, steel alloys, titanium alloys, and other metal alloys that are chemically compatible with spent fuel pool 19 and the working fluid inside hydraulic circuit 5.

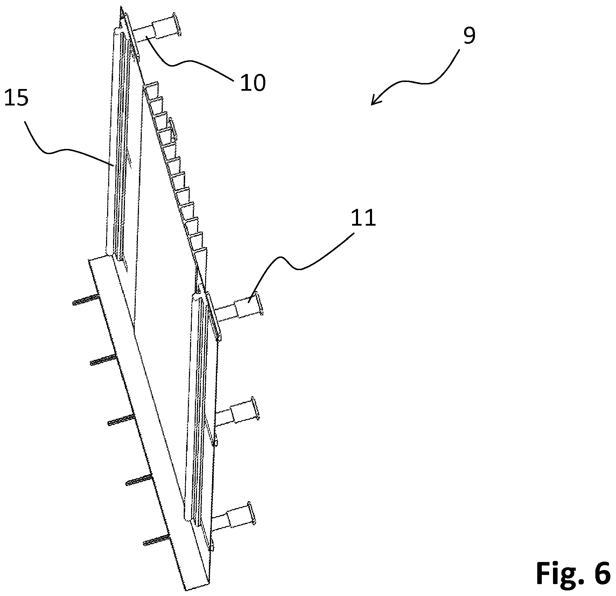

Fig. 6 shows a support structure 9, which may be used to anchor first heat exchanger 1 to liner 8 of spent fuel pool 19 and/or second heat exchanger 6 to a suitable containment or building structure. Support structure 9 may include one or more guiding tracks or rails 15 for slidably receive first or second heat exchanger 1 or 6. First and second heat exchangers 1 and 6 each may include a corresponding structure (e.g., groove or protrusion) for cooperatively engage guiding tracks or rails 15 of support structure 9. In one exemplary embodiment, the corresponding structure in first and second heat exchangers 1 and 6 may be magnetic flanges 11, shown in, for example, Fig. 4.

Liner 8 may include vertical steel plates forming a sealed spent fuel pool liner. Support structure 9 may be a submersible exoskeletal structure and may include one or more seismic dampers 10 and magnetic flanges 11 configured to align and restrain lateral motion of first heat exchanger 1 while mechanically coupling it to liner 8 of spent fuel pool 19. In some exemplary embodiments, support structure 9 may be provided as an integral part of first heat exchanger 1.

Support structure 9 may be lowered and submerged into spent fuel pool 19 to be coupled to liner 8 of spent fuel pool 19 through magnetic flanges 11 mechanically coupled to seismic dampers 10. Support structure 9 may be mechanically coupled to liner 8 without perforation and/or penetration of liner 8. Any other suitable coupling mechanism may be used in addition to or in place of magnetic flanges 11.

According to one exemplary embodiment, if support structure 9 is used to anchor first heat exchanger 1 to liner 8 of spent fuel pool 19, first heat exchanger 1 may not include seismic dampers 10 and/or magnetic flanges 11, since support structure 9 provides them for engagement with liner 8.

Support structure 9 may be made of metal alloys normally utilized for external supporting equipment in a nuclear power plant, as well as non-metal composite materials compatible with environmental corrosion stressors. The material for support structure 9 may be characterized by lightweight and strength to withstand seismic, fire, as well as weather extremes.

If support structure 9 is made integral with first heat exchanger 1, first heat exchanger or a cluster of multiple modular heat exchangers may be eased toward liner 8 until magnetic flanges 11 engage and mechanically couple first heat exchanger 1 to liner 8, thereby securing and restraining lateral movement of the entire structure. Once first heat exchanger 1 is filled with the working fluid, the buoyancy of the entire structure, provided by buoyant tanks 16, can be adjusted to reduce or eliminate strain on magnetic flanges 11.

Second heat exchanger 6 may be structurally anchored to support structure 9, which may be coupled to a reactor containment or suitable building structure 110. The containment or building structure 100 may be exposed to cooling fluid 7, which may be environmental air or water. If cooling fluid 7 is air, passive free-convection air-cooling drafts ensure cooling of second heat exchanger. If cooling fluid 7 is water, passive free-convection ensures cooling of the working fluid inside hydraulic circuit 5.

As hydraulic circuit 5 can include flexible connectors 12, support structure 9 that houses second heat exchanger 6 may be coupled to a suitable structure placed at an arbitrary distance from the reactor containment building. Alternatively, support structure 9 may be anchored directly on the reactor building reinforced concrete 110 or, via magnetic flanges 11, to a containment liner.

With support structure 9, second heat exchanger 6 may be positioned so as to take advantage of large surfaces forming the exterior walls of the reactor building. However, to ensure survivability of the passive decay removal system of the present disclosure, second heat exchanger 6 may also be positioned or retrofitted on an independent scaffolding structure as well as on the roof of the turbine and other buildings adjacent to the reactor building. As hydraulic circuit 5 is formed of flexible members and explosion proof piping, their length can be extended without compromising the pressure boundary characterizing primary or secondary (or both) containment. One or more plugs 5a (see Fig. 1) may be provided as a sealing interface to ensure pressurization of the containment according to regulated safety margins.

For applications dedicated to passive decay heat removal from spent fuel pool 19, installation of first heat exchanger 1 may be executed by lowering first heat exchanger 1 (or a plurality of first heat exchangers 1) into spent fuel pool 19 and coupling it to liner 8 of spent fuel pool 19 through magnetic flanges 11. Coupling first heat exchanger 1 to liner 8 of spent fuel pool 19 may occur without perforation and/or penetration of liner 8.

For first heat exchanger 1 that does not include integral support structure 9, installation of first heat exchanger 1 may include first installing light-weight, submersible support structure 9 to liner 8 by lowering it into spent fuel pool 19 until fully submerged and magnetically coupled to liner 8 of spent fuel pool 19. Then, first heat exchanger 1 may be lowered into spent fuel pool 19 by sliding it along guiding tracks 15 provided in support structure 9.

For first heat exchanger 1 with integral support structure 9, first heat exchanger 1 may be lowered, aligned and magnetically coupled with liner 8. If a plurality of first heat exchangers 1 are to be coupled to liner 8 of spent fuel pool 19, each first heat exchanger 1 may be hydraulically connected to one another and to hydraulic circuit 5 connecting first heat exchangers 1 in spent fuel pool 19 to second heat exchanger 6 positioned outside the reactor building and containment structure 10.

For applications dedicated to passive decay heat removal from RPV cavity 13, installation of first heat exchanger 1 (or a plurality of first heat exchanger 1) may be executed by coupling each heat exchanger 1 to a steel lining of RPV cavity 13 with magnetic flanges 11. For first heat exchanger 1 that does not include support structure 9 or for RPV cavity 13 that does not include a steel liner, installation of first heat exchanger 1 may include first installing support structure 9 to RPV cavity 13 by lowering support structure 9 into RPV cavity and mechanically coupling it to a reinforced concrete structure defining RPV cavity 13 at an elevation that ensures full submersion of first heat exchanger 1 when RPV cavity 13 is flooded. Then, first heat exchanger 1 may be coupled to support structure 9 by sliding it down along guiding tracks 15.

If a plurality of first heat exchangers 1 are to be installed in RPV cavity 13, each first heat exchanger 1 may be hydraulically connected to one another and to hydraulic circuit 5 connecting first heat exchangers 1 in RPV cavity 13 (flooded under an accident condition or under cold-shutdown operations) to second heat exchanger 6 positioned outside the reactor building and containment structures 10.

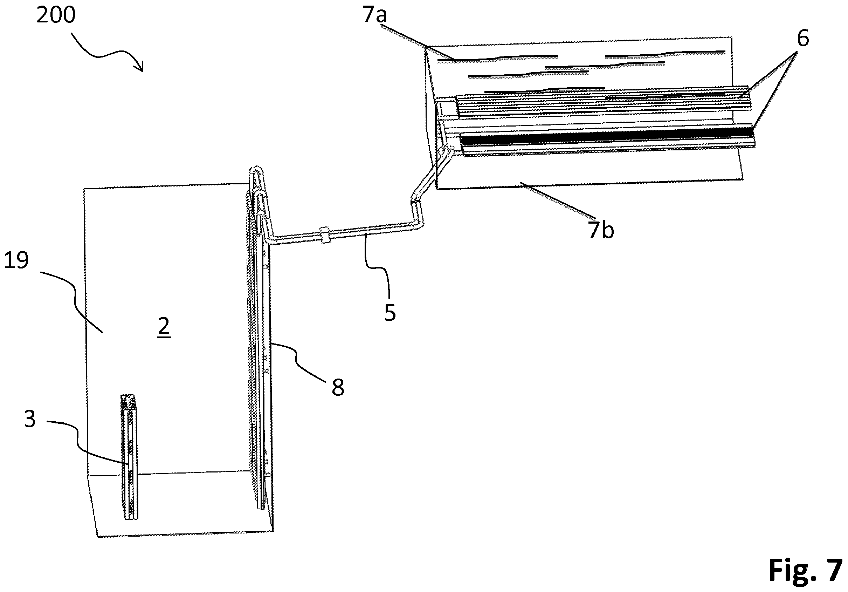

Fig. 7 schematically illustrates a passive decay heat removal system 200 according to another exemplary embodiment of the present disclosure. This embodiment differs from the embodiment shown in Fig. 1 in that a body of water or water 7a in a large tank 7b is available as a redundant UHS and that second heat exchanger 6 may be aligned horizontally under water 7a. In this particular embodiment, second heat exchanger 6 may be substantially identical to first heat exchanger 1, but with modified buoyant tanks 16 that allow horizontal operation. As shown in Fig. 7, second heat exchanger 6 may be submerged in water 7a to transfer thermal energy from the working fluid of hydraulic circuit 5 to water 7a and passively provide cooling to the fuel stored in spent fuel pool 19.

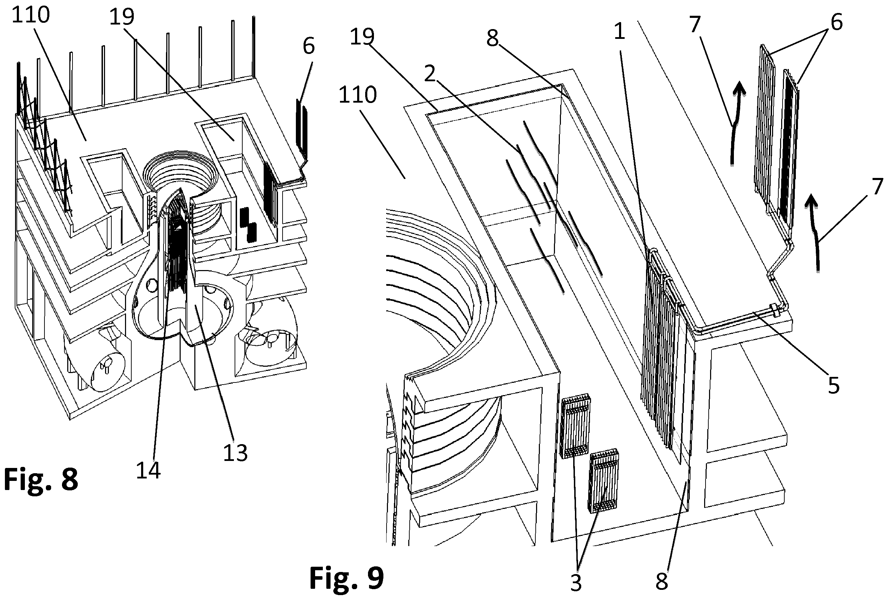

Figs. 8 through 11 illustrate exemplary applications of the passive decay heat removal system of the present disclosure in a nuclear reactor. While the passive decay heat removal system of the present disclosure can be retrofitted or installed to virtually all types of reactor designs, the example provided in Figs. 8 through 11 addresses a BWR Mark I containment design - the same reactor design at the Fukushima Daiichi power station in Japan - for illustration purposes only.

Fig. 8 is a schematic view of the reactor building 110 showing the elevations of RPV cavity 13, reactor core within RPV 14, and spent fuel pool 19. Fig. 9 provides in greater detail of spent fuel pool 19 retrofitted with the passive decay heat removal system of the present disclosure. As shown in the figures, spent fuel pool 19 may store relatively a large amount of spent and/or operational fuel discharging thermal energy into pool by convective heat transfer with water 2. Even in the total absence of electricity normally required to ensure active circulation of water 2 through one or more electric pumps and heat exchangers, the passive decay heat removal system of the present disclosure retrofitted or installed to spent fuel pool 19 can maintain effective cooling of fuel by energy transfer via hydraulic circuit 5 and second heat exchanger 6.

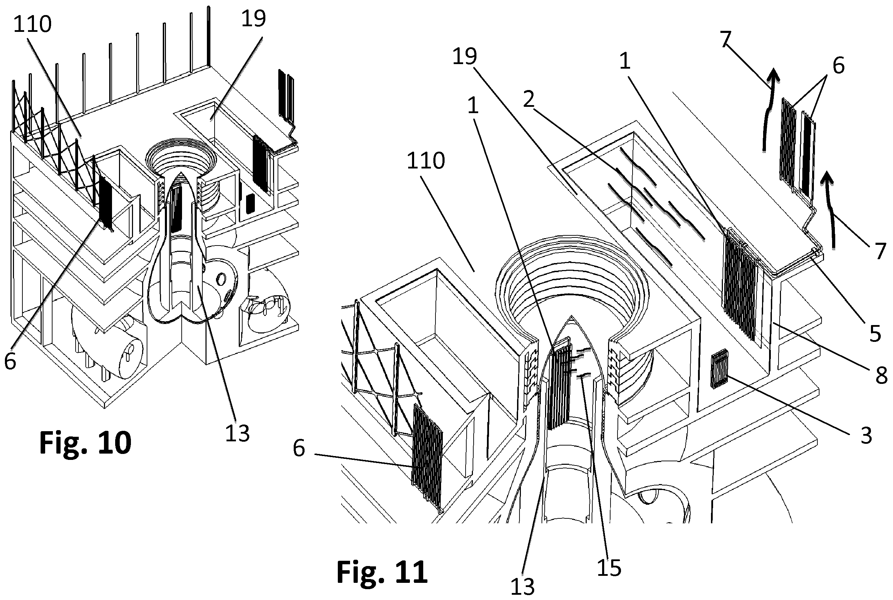

Figs. 10 and 11 represent a retrofitting application of the decay heat removal system of the present disclosure, where decay heat is removed passively from both spent fuel pool 19 and RPV cavity 13. Support structure 9 housing or supporting first heat exchanger 1 may be retrofitted in RPV cavity 13 to passively remove decay heat from reactor core 14 under an accident condition involving flooding of RPV cavity 13 with a suitable fluid (e.g., water or gas) 15. Support structure 9 in RPV cavity 13 may be mechanically coupled to a liner or directly to a reinforced concrete to position first heat exchanger 1 at an adequate elevation for enabling effective passive flow recirculation. In this exemplary configuration, decay heat from reactor core 14 may be transferred to fluid 15 that floods RPV cavity 13 and then to the working fluid circulating within hydraulic circuit 5 connecting between first heat exchanger 1 and second heat exchanger 6.

Certain exemplary embodiments of the present disclosure focus on a passive decay heat removal system obtained by retrofitting spent fuel pool 19 and RPV cavity 13 and equipping the external structures of the reactor and containment building, or buildings and scaffolding adjacent the reactor building, with support structures 9 that may house first heat exchanger 1 and second heat exchanger 6.

Various exemplary embodiments may provide the ability of the passive decay heat removal system to execute thermal energy transfer with air or water in the surroundings of the power plant and representing an additional and independent UHS. Also, various exemplary embodiments may provide the ability of the passive decay heat removal system and related methods to maintain adequate cooling of the fuel stored in the spent fuel pool by non-invasively retrofitting the spent fuel pool structures without impairing normal power plant operations.

Since the passive decay heat removal system of the present disclosure does not require electricity and instead relies on a redundant, independent, and always available UHS, it may provide a nuclear plant with an additional cooling mechanism, thereby enhancing safety of the nuclear plant.

Additional objects and advantages of the invention will be set forth in part in the description provided, and in part will be obvious from the description, or may be learned by practicing the invention. The objects and advantages of the invention will be realized and attained by means of the elements and combinations particularly pointed out in the appended claims.

## Claims

1. A passive cooling system (100) comprising:
a first buoyant heat exchanger (1) in thermal communication with a first fluid (2);
a second heat exchanger (6) in thermal communication with a second fluid (7); and
a hydraulic circuit (5) connecting between the first buoyant heat exchanger and the second heat exchanger,
wherein the second heat exchanger is positioned at a higher elevation than the first buoyant heat exchanger, such that a working fluid inside the hydraulic circuit flows between the first and second heat exchangers via natural circulation.

2. The system of claim 1, wherein the hydraulic circuit comprises a cold leg (20) and a hot leg (21), the cold leg is configured to connect between an inlet of the first buoyant heat exchanger and an outlet of the second heat exchanger, and the hot leg is configured to connect between an outlet of the first buoyant heat exchanger and an inlet of the second heat exchanger.

3. The system of claim 1, wherein the first buoyant heat exchanger comprises a buoyant tank (16) configured to provide a buoyant force when the first buoyant heat exchanger is submerged into the first fluid.

4. The system of claim 1, wherein the first buoyant heat exchanger comprises a plurality of modular heat exchangers interconnected to one another.

5. The system of claim 1, further comprising a support structure (9) for anchoring the first buoyant heat exchanger to an enclosure structure that at least partially encloses the first fluid.

6. The system of claim 5, wherein the support structure is integrally formed with the first buoyant heat exchanger.

7. The system of claim 5, wherein the support structure comprises a magnetic flange (11) configured to engage a steel plate of the enclosure structure.

8. The system of claim 5, wherein the enclosure structure comprises a spent fuel pool (19) of a nuclear reactor.

9. The system of claim 5, wherein the enclosure structure comprises a reactor pressure vessel cavity of a nuclear reactor.

10. A heat exchanger (1) comprising:
a main body (13) defining an inlet, an outlet, and a flow passageway connecting between the inlet and outlet; and
a pair of buoyant tanks (16) each fixed to each opposing side of the main body for providing buoyant force when the main body is submerged into fluid.

11. The heat exchanger of claim 10, wherein each of the buoyant tanks comprises a substantially conical shape.

12. A decay heat removal system for use in a nuclear reactor, comprising:
a first buoyant heat exchanger (1) in thermal communication with a first fluid inside the nuclear reactor;
a second heat exchanger (6) in thermal communication with a heat sink located outside a reactor containment; and
a hydraulic circuit (5) connecting between the first heat exchanger and the second heat exchanger,
wherein the second heat exchanger is positioned at a higher elevation than the first buoyant heat exchanger, such that a working fluid inside the hydraulic circuit flows between the first and second heat exchangers via natural circulation.

13. The system of claim 12, wherein the hydraulic circuit comprises a cold leg (20) and a hot leg (21) , the cold leg is configured to connect between an inlet of the first buoyant heat exchanger and an outlet of the second heat exchanger, and the hot leg is configured to connect between an outlet of the first buoyant heat exchanger and an inlet of the second heat exchanger.

14. The system of claim 12, wherein the first buoyant heat exchanger comprises a buoyant tank configured to provide a buoyant force when the first buoyant heat exchanger is submerged into the first fluid.

15. The system of claim 12, wherein the first buoyant heat exchanger comprises a plurality of modular heat exchangers interconnected to one another.

16. The system of claim 12, wherein the first fluid comprises water of a spent fuel pool (19).

17. The system of claim 16, wherein the first fluid comprises flood water in a reactor pressure vessel cavity (13).

18. The system of claim 12, comprising a support structure (9) for anchoring the first buoyant heat exchanger to an enclosure structure that at least partially encloses the first fluid.

19. The system of claim 18, wherein the support structure is integrally formed with the first buoyant heat exchanger.

20. The system of claim 18, wherein the support structure comprises a magnetic flange (11) configured to engage a steel plate of the enclosure structure.

21. A method of removing decay heat from a nuclear reactor, comprising:
transferring decay heat from a spent fuel to a first fluid;
transferring heat from the first fluid to a second fluid via a first buoyant heat exchanger;
allowing the second fluid in the first buoyant heat exchanger to flow to a second heat exchanger; and
transferring heat from the second fluid to a heat sink located outside a reactor containment via the second heat exchanger,
wherein the flow of the second fluid between the first buoyant heat exchanger and the second heat exchanger occurs via natural circulation.

22. The method of claim 21, wherein transferring decay heat from the spent fuel to the first fluid comprises transferring decay heat generated from the spent fuel located in a spent fuel pool to water of the spent fuel pool.

23. The method of claim 21, wherein transferring decay heat from the spent fuel to the first fluid comprises transferring decay heat generated from the spent fuel located inside a reactor pressure vessel cavity to water flooded in the reactor pressure vessel cavity.

24. The method of claim 21, wherein the second heat exchanger is positioned at a higher elevation than the first buoyant heat exchanger.

25. The method of claim 21, further comprising connecting an inlet and outlet of the first buoyant heat exchanger to a cold leg and a hot leg, respectively, of a hydraulic connection between the first and second heat exchangers and connecting an inlet and outlet of the second heat exchanger to the hot leg and the cold leg, respectively, of the hydraulic connection.

26. The method of claim 21, further comprising anchoring the first buoyant heat exchanger to a liner (8) of a spent fuel pool.

## Patentansprüche

1. Eine passives Kühlsystem (100), umfassend:
- einen ersten, schwimmfähigen Wärmetauscher (1) in thermischem Kontakt mit einem ersten Fluid (2);
- einen zweiten Wärmetauscher (6) in thermischem Kontakt mit einem zweiten Fluid (7);
- einem Hydraulikkreis (5), angeschlossen zwischen dem ersten, schwimmfähigen Wärmetauscher und dem zweiten Wärmetauscher,
wobei der zweite Wärmetauscher auf einem höheren Niveau angeordnet ist als der erste, schwimmfähige Wärmetauscher, so dass ein Arbeitsfluid innerhalb des Hydraulikkreises per natürlicher Zirkulation zwischen dem ersten und zweiten Wärmetauscher fließt.

2. Das System nach Anspruch 1, wobei der Hydraulikkreis einen kalten Schenkel (20) und einen heißen Schenkel (21) umfasst, wobei der kalte Schenkel derart konfiguriert ist, dass er zwischen einem Einlass des ersten, schwimmfähigen Wärmetauschers und einem Auslass des zweiten Wärmetauschers eingeschalten ist, und der heiße Schenkel ist derart konfiguriert, dass er zwischen einem Auslass des ersten, schwimmfähigen Wärmetauschers und einem Einlass des zweiten Wärmetauschers eingeschalten ist.

3. Das System nach Anspruch 1, wobei der erste, schwimmfähige Wärmetauscher einen schwimmfähigen Behälter (16) umfasst, welcher derart konfiguriert ist, das er eine Auftriebskraft erzeugt, wenn der erste, schwimmfähige Wärmetauscher in dem ersten Fluid untergetaucht ist.

4. Das System nach Anspruch 1, wobei der erste, schwimmfähige Wärmetauscher eine Mehrzahl von modularen Wärmetauschern aufweist, welche untereinander verbunden sind.

5. Das System nach Anspruch 1, ferner umfassend eine Tragstruktur (9) zur Verankerung des ersten, schwimmfähigen Wärmetauschers an einer Gehäusestruktur, welche das erste Fluid wenigstens teilweise umgibt.

6. Das System nach Anspruch 5, wobei die Tragstruktur mit dem ersten, schwimmfähigen Wärmetauscher integral ausgebildet ist.

7. Das System nach Anspruch 5, wobei die Tragstruktur einen magnetischen Flansch (11) aufweist, der für die Ankupplung an einer Stahlplatte der Gehäusestruktur konfiguriert ist.

8. Das System nach Anspruch 5, wobei die Gehäusestruktur ein Becken (19) eines Kernreaktors für ausgebrannten Brennstoff umfasst.

9. Das System nach Anspruch 5, wobei die Gehäusestruktur den Hohlraum eines Reaktor-Druckbehälters eines Kernreaktors umfasst.

10. Ein Wärmetauscher, umfassend:
- einen Hauptkörper (13), der einen Einlass abgrenzt, einen Auslass, sowie eine Durchflusspassage, welche zwischen dem Einlass und dem Auslass eingeschalten ist; und
- ein Paar von schwimmfähigen Behältern (16), von denen jeder an je einer der gegenüberliegenden Seiten des Hauptkörpers festgelegt ist, um eine Auftriebskraft zu erzeugen, wenn der Hauptkörper in einem Fluid untergetaucht ist.

11. Der Wärmetauscher nach Anspruch 10, wobei jeder der schwimmfähigen Behälter eine substantiell konische Gestalt aufweist.

12. Ein System zur Abführung der Zerfallswärme zur Verwendung in einem Kernreaktor, umfassend:
- einen ersten, schwimmfähigen Wärmetauscher (1) in thermischem Kontakt mit einem ersten Fluid innerhalb des Kernreaktors;
- einen zweiten Wärmetauscher (6) in thermischem Kontakt mit einer außerhalb eines Reaktor-Sicherheitsbehälters angeordneten Wärmesenke;
- einem Hydraulikkreis (5), angeschlossen zwischen dem ersten, schwimmfähigen Wärmetauscher und dem zweiten Wärmetauscher,
wobei der zweite Wärmetauscher auf einem höheren Niveau angeordnet ist als der erste, schwimmfähige Wärmetauscher, so dass ein Arbeitsfluid innerhalb des Hydraulikkreises per natürlicher Zirkulation zwischen dem ersten und zweiten Wärmetauscher fließt.

13. Das System nach Anspruch 12, wobei der Hydraulikkreis einen kalten Schenkel (20) und einen heißen Schenkel (21) umfasst, wobei der kalte Schenkel derart konfiguriert ist, dass er zwischen einem Einlass des ersten, schwimmfähigen Wärmetauschers und einem Auslass des zweiten Wärmetauschers eingeschalten ist, und der heiße Schenkel ist derart konfiguriert, dass er zwischen einem Auslass des ersten, schwimmfähigen Wärmetauschers und einem Einlass des zweiten Wärmetauschers eingeschalten ist.

14. Das System nach Anspruch 12, wobei der erste, schwimmfähige Wärmetauscher einen schwimmfähigen Behälter umfasst, welcher derart konfiguriert ist, das er eine Auftriebskraft erzeugt, wenn der erste, schwimmfähige Wärmetauscher in dem ersten Fluid untergetaucht ist.

15. Das System nach Anspruch 12, wobei der erste, schwimmfähige Wärmetauscher eine Mehrzahl von modularen Wärmetauschern aufweist, welche untereinander verbunden sind.

16. Das System nach Anspruch 12, wobei das erste Fluid das Wasser in einem Becken (19) für ausgebrannten Brennstoff umfasst.

17. Das System nach Anspruch 16, wobei das erste Fluid das Flutungswasser in dem Hohlraum (13) eines Reaktor-Druckbehälters umfasst.

18. Das System nach Anspruch 12, umfassend eine Tragstruktur (9) zur Verankerung des ersten, schwimmfähigen Wärmetauschers an einer Gehäusestruktur, welche das erste Fluid wenigstens teilweise umgibt.

19. Das System nach Anspruch 18, wobei die Tragstruktur mit dem ersten, schwimmfähigen Wärmetauscher integral ausgebildet ist.

20. Das System nach Anspruch 18, wobei die Tragstruktur einen magnetischen Flansch (11) aufweist, der für die Ankupplung an einer Stahlplatte der Gehäusestruktur konfiguriert ist.

21. Ein Verfahren zur Abführung der Zerfallswärme von einem Kernreaktor, umfassend:
- Übertragen der Zerfallswärme von einem ausgebrannten Brennstoff auf ein erstes Fluid;
- Übertragen der Wärme von dem ersten Fluid mittels eines ersten, schwimmfähigen Wärmetauschers auf ein zweites Fluid;
- Leiten des zweiten Fluids in dem ersten, schwimmfähigen Wärmetauscher zu einem zweiten Wärmetauscher; und
- Übertragen der Wärme von dem zweiten Fluid mittels des zweiten Wärmetauschers zu einer außerhalb eines Reaktor-Sicherheitsbehälters angeordneten Wärmesenke,
- wobei die Strömung des zweiten Fluids zwischen dem ersten, schwimmfähigen Wärmetauscher und dem zweiten Wärmetauscher infolge natürlicher Zirkulation stattfindet.

22. Das Verfahren nach Anspruch 21, wobei die Übertragung der Zerfallswärme von dem ausgebrannten Brennstoff auf das erste Fluid die Übertragung der von dem ausgebrannten Brennstoff in einem Becken für ausgebrannten Brennstoff erzeugten Wärme auf das Wasser des Beckens für ausgebrannten Brennstoff umfasst.

23. Das Verfahren nach Anspruch 21, wobei die Übertragung der Zerfallswärme von dem ausgebrannten Brennstoff auf das erste Fluid die Übertragung der von dem ausgebrannten Brennstoff in dem Hohlraum innerhalb eines Reaktor-Druckbehälters erzeugten Wärme auf das Wasser umfasst, mit dem der Hohlraum innerhalb des Reaktor-Druckbehälters geflutet ist.

24. Das Verfahren nach Anspruch 21, wobei der zweite Wärmetauscher auf einem höheren Niveau angeordnet ist als der erste, schwimmfähige Wärmetauscher.

25. Das Verfahren nach Anspruch 21, ferner umfassend den Anschluss eines Einlasses und Auslasses des ersten, schwimmfähigen Wärmetauschers an einem kalten Schenkel bzw. einem heißen Schenkel einer Hydraulik-Verbindung zwischen dem ersten und zweiten Wärmetauscher, und den Anschluss eines Einlasses und Auslasses des zweiten Wärmetauschers an dem heißen Schenkel bzw. dem kalten Schenkel der Hydraulik-Verbindung.

26. Das Verfahren nach Anspruch 21, ferner umfassend die Verankerung des ersten, schwimmfähigen Wärmetauschers an einem Mantel (8) eines Beckens für ausgebrannten Brennstoff.

## Revendications

1. Système de refroidissement passif (100) comprenant :
un premier échangeur de chaleur flottant (1) en communication thermique avec un premier fluide (2) ;
un second échangeur de chaleur (6) en communication thermique avec un second fluide (7) ; et
un circuit hydraulique (5) se raccordant entre le premier échangeur de chaleur flottant et le second échangeur de chaleur,
dans lequel le second échangeur de chaleur est positionné à une hauteur plus haute que le premier échangeur de chaleur flottant, de sorte qu'un fluide de travail à l'intérieur du circuit hydraulique s'écoule entre les premier et second échangeurs de chaleur via la circulation naturelle.

2. Système selon la revendication 1, dans lequel le circuit hydraulique comprend une branche froide (20) et une branche chaude (21),
la branche froide est configurée pour se raccorder entre une entrée du premier échangeur de chaleur flottant et une sortie du second échangeur de chaleur, et la branche chaude est configurée pour se raccorder entre une sortie du premier échangeur de chaleur flottant et une entrée du second échangeur de chaleur.

3. Système selon la revendication 1, dans lequel le premier échangeur de chaleur flottant comprend un réservoir flottant (16) configuré pour fournir une force de flottabilité lorsque le premier échangeur de chaleur flottant est immergé dans le premier fluide.

4. Système selon la revendication 1, dans lequel le premier échangeur de chaleur flottant comprend une pluralité d'échangeurs de chaleur modulaires interconnectés entre eux.

5. Système selon la revendication 1, comprenant en outre une structure de support (9) pour ancrer le premier échangeur de chaleur flottant à une structure d'enceinte qui enferme au moins partiellement le premier fluide.

6. Système selon la revendication 5, dans lequel la structure de support est formée de manière solidaire avec le premier échangeur de chaleur flottant.

7. Système selon la revendication 5, dans lequel la structure de support comprend une bride magnétique (11) configurée pour mettre en prise une plaque d'acier de la structure d'enceinte.

8. Système selon la revendication 5, dans lequel la structure d'enceinte comprend un bassin de combustible irradié (19) d'un réacteur nucléaire.

9. Système selon la revendication 5, dans lequel la structure d'enceinte comprend une cavité de cuve sous pression de réacteur d'un réacteur nucléaire.

10. Echangeur de chaleur (1) comprenant :
un corps principal (13) définissant une entrée, une sortie et une voie de passage d'écoulement se raccordant entre l'entrée et la sortie ; et
une paire de réservoirs flottants (16), chacun fixé à chaque côté opposé du corps principal pour fournir la force de flottabilité lorsque le corps principal est immergé dans le fluide.

11. Echangeur de chaleur selon la revendication 10, dans lequel chacun des réservoirs flottants comprend une forme sensiblement conique.

12. Système de dissipation de la chaleur de décroissance destiné à être utilisé dans un réacteur nucléaire, comprenant :
un premier échangeur de chaleur (1) en communication thermique avec un premier fluide à l'intérieur du réacteur nucléaire ;
un second échangeur de chaleur (6) en communication thermique avec un dissipateur de chaleur situé à l'extérieur d'un confinement de réacteur ; et
un circuit hydraulique (5) se raccordant entre le premier échangeur de chaleur et le second échangeur de chaleur,
dans lequel le second échangeur de chaleur est positionné à une hauteur plus haute que le premier échangeur de chaleur flottant, de sorte qu'un fluide de travail à l'intérieur du circuit hydraulique s'écoule entre les premier et second échangeurs de chaleur, via la circulation naturelle.

13. Système selon la revendication 12, dans lequel le circuit hydraulique comprend une branche froide (20) et une branche chaude (21), la branche froide est configurée pour se raccorder entre une entrée du premier échangeur de chaleur flottant et une sortie du second échangeur de chaleur, et la branche chaude est configurée pour se raccorder entre une sortie du premier échangeur de chaleur flottant et une entrée du second échangeur de chaleur.

14. Système selon la revendication 12, dans lequel le premier échangeur de chaleur flottant comprend un réservoir flottant configuré pour fournir une force de flottabilité lorsque le premier échangeur de chaleur flottant est immergé dans le premier fluide.

15. Système selon la revendication 12, dans lequel le premier échangeur de chaleur flottant comprend une pluralité d'échangeurs de chaleur modulaires interconnectés entre eux.

16. Système selon la revendication 12, dans lequel le premier fluide comprend de l'eau d'un bassin de combustible irradié (19).

17. Système selon la revendication 16, dans lequel le premier fluide comprend de l'eau de crue dans une cavité de cuve sous pression de réacteur (13).

18. Système selon la revendication 12, comprenant une structure de support (9) pour ancrer le premier échangeur de chaleur flottant à une structure d'enceinte qui enferme au moins partiellement le premier fluide.

19. Système selon la revendication 18, dans lequel la structure de support est formée de manière solidaire avec le premier échangeur de chaleur flottant.

20. Système selon la revendication 18, dans lequel la structure de support comprend une bride magnétique (11) configurée pour mettre en prise une plaque d'acier de la structure d'enceinte.

21. Procédé pour dissiper la chaleur de décroissance d'un réacteur nucléaire, comprenant les étapes consistant à :
transférer la chaleur de décroissance d'un combustible irradié à un premier fluide ;
transférer la chaleur du premier fluide à un second fluide via un premier échangeur de chaleur flottant ;
permettre au second fluide dans le premier échangeur de chaleur flottant de s'écouler dans un second échangeur de chaleur ; et
transférer la chaleur du second fluide à un dissipateur de chaleur situé à l'extérieur d'un confinement de réacteur via le second échangeur de chaleur,
dans lequel l'écoulement du second fluide entre le premier échangeur de chaleur flottant et le second échangeur de chaleur a lieu via la circulation naturelle.

22. Procédé selon la revendication 21, dans lequel l'étape consistant à transférer la chaleur de décroissance du combustible irradié au premier fluide comprend l'étape consistant à transférer la chaleur de décroissance générée par le combustible irradié situé dans un bassin de combustible irradié à l'eau du bassin de combustible irradié.

23. Procédé selon la revendication 21, dans lequel l'étape consistant à transférer la chaleur de croissance du combustible irradié au premier fluide comprend l'étape consistant à transférer la chaleur de décroissance générée par le combustible irradié situé dans une cavité de cuve sous pression de réacteur à l'eau qui a afflué dans la cavité de cuve sous pression de réacteur.

24. Procédé selon la revendication 21, dans lequel le second échangeur de chaleur est positionné à une hauteur plus haute que le premier échangeur de chaleur flottant.

25. Procédé selon la revendication 21, comprenant en outre l'étape consistant à raccorder une entrée et une sortie du premier échangeur de chaleur flottant à une branche froide et une chambre chaude, respectivement, d'un raccordement hydraulique entre les premier et second échangeurs de chaleur et l'étape consistant à raccorder une entrée et une sortie du second échangeur de chaleur à la branche chaude et à la branche froide respectivement du raccordement hydraulique.

26. Procédé selon la revendication 21, comprenant en outre l'étape consistant à ancrer le premier échangeur de chaleur flottant à un revêtement (8) d'un bassin de combustible irradié.
